# FASCICULE DE BREVET EUROPEEN

(11) **EP 0 599 371 B1**
(45) Date de publication et mention de la délivrance du brevet: **17.09.1997**
(21) Numéro de dépôt: 93203147.9
(22) Date de dépôt: 11.11.1993
(51) Int. Cl.: F27D 5/00, B22F 3/10, C04B 35/64, B29C 53/04, C04B 35/26

(54) **Procédé et matériel de frittage de secteurs de ferrite**
Verfahren und Sinterungsmitteln für Ferritsektoren
Process and sintering means for ferrite sectors

(30) Priorité: 18.11.1992 FR 9213853
(43) Date de publication de la demande: 01.06.1994
(73) Titulaire: PHILIPS COMPOSANTS ET SEMICONDUCTEURS, 92150 Suresnes (FR); Philips Electronics N.V., 5621 BA Eindhoven (NL)
(72) Inventeur: Ledran, Jean-Paul, Société Civile S.P.I.D., F-75008 Paris (FR)
(74) Mandataire: Caron, Jean

(56) Documents cités:
- DE-B- 1 141 077
- GB-A- 990 316
- GB-A- 1 064 012
- GB-A- 2 127 530
- US-A- 3 989 789
- US-A- 4 144 060
- DATABASE WPI Section Ch, Week 88, Derwent Publications Ltd., London, GB; Class L02, AN 88222704 & JP-A-63 156 061 (FUJI) 29 Juin 1988

## Description

La présente invention concerne un procédé pour le frittage d'aimants, c'est-à-dire le chauffage à haute température d'une pièce de matériau magnétique préalablement moulée, la dite pièce étant moulée en forme de secteur de cylindre de révolution et étant, pendant la durée de la phase de chauffage, posée avec sa concavité tournée vers le haut sur un support où elle est supportée par une surface cylindrique concave d'axe horizontal ayant sa concavité tournée vers le haut, cependant qu'un corps pesant possédant au moins une surface inférieure cylindrique de révolution d'axe horizontal est posé sur la dite pièce de matériau magnétique.
Un tel procédé s'applique dans l'industrie électrique et électronique pour la fabrication d'aimants, par exemple pour des moteurs de puissance fractionnaire, largement utilisés notamment dans l'automobile et les appareils ménagers.
L'invention concerne également un matériel pour le frittage de pièces de matériau magnétique préalablement moulées en forme de secteurs de cylindre de révolution, comportant au moins un support dont une surface supérieure concave est un secteur de cylindre d'axe horizontal ayant sa concavité tournée vers le haut, destinée à y disposer une pièce avec sa concavité également tournée vers le haut, et au moins un corps pesant possédant une surface cylindrique de révolution, destiné à être posé sur la dite pièce avec sa surface cylindrique en dessous.

L'utilisation d'un support de forme adaptée et d'un corps pesant posé sur les pièces est connue du document US-B-4,144,060. Selon ce document, des ébauches d'aimants dont la section est en arc de cercle sont placées pendant le frittage dans un support qui épouse complètement la forme des pièces. Il s'agit d'aimants de terres rares, c'est-à-dire d'aimants métalliques constitués d'un agrégat de grains non thermoplastique. Les pièces considérées ont tendance à se déformer durant le frittage en s'incurvant vers l'intérieur, et pour empêcher cela elles sont enfermées entre un corps pesant et un support, dont les surfaces ont exactement la forme désirée pour les pièces finies. Comme cela est expliqué en détail dans le document, du fait qu'ils sont en contact intime avec l'essentiel de la surface des pièces, ces éléments doivent être réalisés dans une matière qui réponde à de nombreuses exigences : il doivent être faits d'une matière qui n'adhère pas aux pièces durant le chauffage, qui conserve sa forme à des températures élevées, et qui soit bonne conductrice de la chaleur.

L'invention concerne la fabrication d'aimants de ferrite, notamment du type connu sous l'appellation commerciale "ferroxdure" (qui sont des ferrites essentiellement de baryum et/ou de strontium), dont la matière première est thermoplastique et qui ont donc, durant le frittage, un comportement notablement différent de celui des aimants métalliques.
L'invention se propose de fournir un procédé de frittage d'aimants de ferrite, faisant usage d'un matériel de frittage très bon marché, pour lequel aucune des nombreuses exigences mentionnées ci-dessus ne sont nécessaires, et avec lesquels il soit néanmoins possible de produire des pièces de dimensions précises et ne réclamant que peu ou pas de rectification mécanique. Elle a pour but de mettre les aimants en forme et non de les empêcher de se déformer.
Le but de l'invention est atteint du fait que, la pièce étant une pièce de ferrite, le rayon de la section de la surface inférieure cylindrique du dit corps pesant est inférieur au rayon interne de la section de la pièce de ferrite.
L'invention est donc basée sur l'idée de départ que pour mettre les pièces en forme, il est peut-être inutile que le support et corps pesant soient en contact intime avec les pièces, et aient exactement leur forme. Ainsi les outillages sont bon marché parce qu'ils sont simples à fabriquer et surtout parce qu'un même type de corps pesant peut être utilisé pour des pièces de dimensions variées, ce qui veut dire que l'on peut fabriquer toute une gamme de types de pièces avec seulement quelques modèles de corps pesants, au lieu de devoir prévoir un modèle différent de corps pesant pour chaque type de pièce de ferrite. En outre le corps pesant ne risque pas de coller à la pièce de ferrite, grâce à son rayon plus petit que celui de cette dernière.
Le dit corps peut être fait de "cordiérite", qui est le matériau habituel des casettes de frittage (on appelle casette une sorte de plateau sur lequel les pièces de ferrite sont posées pendant la cuisson).
Avantageusement, la dite surface cylindrique concave est obtenue en moulant une casette de frittage avec un fond muni d'une pluralité de rigoles dont la section est en forme d'arc de cercle dont la concavité est tournée vers le haut et dont le rayon est inférieur ou égal au rayon externe de la section de la pièce de ferrite avant frittage.
Ainsi les casettes présentent peu de changement par rapport à des casettes standard et la seule opération additionnelle dans le processus de fabrication du ferrite est de poser les corps pesants sur les pièces à fritter.
Selon une variante, la dite surface concave est obtenue en posant dans une casette standard de frittage une pluralité de pièces additionnelles dont la section est en forme d'arc de cercle dont la concavité est tournée vers le haut et dont le rayon de la surface supérieure est inférieur ou égal au rayon externe de la section de la pièce de ferrite avant frittage.
Ainsi les casettes standard continuent d'être utilisées (un seul modèle étant nécessaire pour l'ensemble de la production), et les pièces additionnelles peuvent être obtenues à partir de moules simples.
Dans le matériel permettant la mise en oeuvre du procédé selon l'invention, le rayon de la section de la dite surface cylindrique des corps pesants est inférieur au rayon interne de la section des pièces de ferrite avant frittage.

Ces aspects de l'invention ainsi que d'autres aspects plus détaillés apparaîtront plus clairement grâce à la description suivante d'un mode de réalisation non limitatif.

La figure 1 représente des secteurs de ferrite vus en perspective.

La figure 2 représente une casette selon l'invention avec un secteur de ferrite et un corps pesant posé dessus.

La figure 3 représente schématiquement des sections de diverses formes de réalisation du matériel destiné à l'invention.

Pour mémoire, la fabrication de pièces de ferrite de baryum / strontium comporte les opérations suivantes :
- pesée et mélange des matières premières, à savoir les constituants magnétiques et une faible quantité de fondant, dit "seconde phase", dont la composition se rapproche de celle d'un verre, et qui donnera au mélange des propriétés thermoplastiques,
- granulation, c'est-à-dire mise sous forme de petites billes pour éviter des bourrages ultérieurs dans le four de préfrittage,
- préfrittage, c'est-à-dire cuisson à environ 1300° pour réaliser les réactions chimiques qui forment le ferrite,
- broyage en phase aqueuse fournissant des particules d'environ 0,8 µm,
- décantation,
- pressage des particules sous champ magnétique, qui chasse la majeure partie de l'eau (il en reste environ 13%) et fixe les cristaux de ferrite avec l'orientation désirée,
- séchage à basse température,
- frittage à environ 1250° dans un four tunnel, qui donne une densité correcte, ainsi que la dureté et les propriétés magnétiques,
- et enfin rectification mécanique pour obtenir des cotes précises.

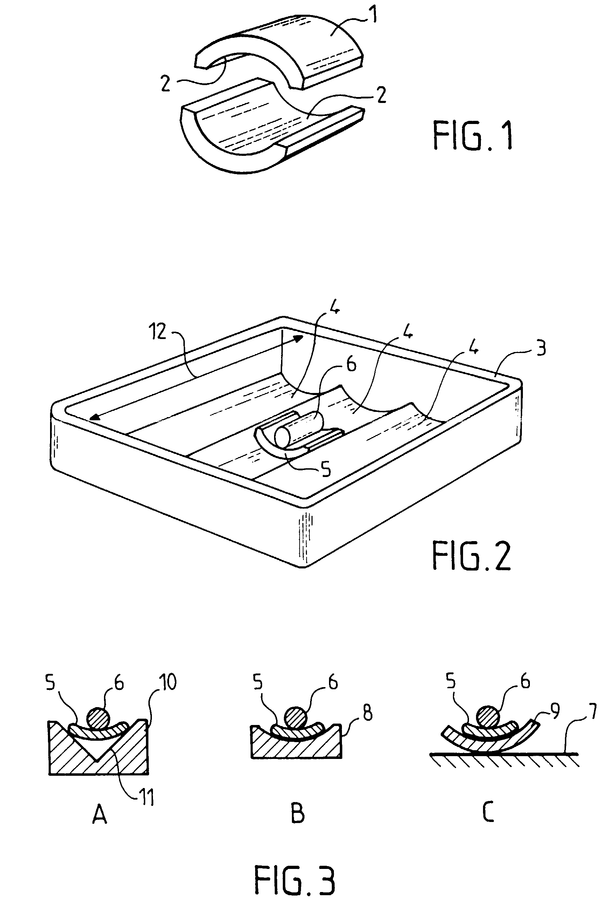

Le frittage engendre des retraits anisotropes, qui peuvent par exemple être de l'ordre de 15% dans une direction et de 30% dans une autre direction perpendiculaire à la première, et qui engendrent des déformations en l'absence de précautions particulières. Ces déformations entraînent la nécessité de rectifier ensuite les pièces si l'on désire des cotes précises. Plus les déformations sont importantes, plus la quantité de matière à reprendre est grande et plus cela coûte cher, à cause du coût des meules, du temps passé, et aussi des défauts additionnels éventuellement apportés aux pièces par l'opération de rectification elle même.
Les deux pièces de ferrite qui sont représentées sur la figure 1 ont chacune la forme d'un secteur de cylindre de révolution.
Elles comportent une face extérieure 1 et une face intérieure 2 toutes deux en forme de secteur de cylindre de révolution. Elles sont représentées sur la figure dans la position, vis-à-vis l'une de l'autre, qu'elles occuperaient dans un moteur électrique. A l'intérieur des deux pièces serait alors présent un rotor cylindrique tournant dont la surface extérieure cylindrique devrait passer le plus près possible des surfaces 2. On comprend dès lors pourquoi ces surfaces ainsi que l'ensemble des pièces doivent avoir une bonne définition mécanique.
La casette représentée sur la figure 2 a globalement la forme habituelle des casettes destinées au frittage de pièces de ferrite. Elle est réalisée à cet effet par moulage en céramique blanche, de préférence en alumine ou en cordiérite. Le fond de cette casette est particulier, en ce qu'il présente trois gorges ou rigoles 4 dont la surface est cylindrique. On entend ici le mot "cylindrique" dans son sens le plus général, à savoir un solide engendré par une droite qui se déplace parallèlement à elle même en s'appuyant sur une courbe (directrice). La courbe directrice n'est pas obligatoirement un arc de cercle, mais peut être par exemple une ligne brisée. Néanmoins la section représentée sur la figure 2 est en forme d'un arc de cercle dont la concavité est tournée vers le haut.
Une pièce de ferrite 5 est disposée avec sa concavité tournée vers le haut sur la surface cylindrique concave d'une des rigoles 4, et un corps pesant 6 est posé sur le fond de la dite pièce de ferrite. Il est clair que dans la pratique, ce sont plusieurs pièces qui seraient ainsi posées pour être frittées ensemble, avec un corps pesant sur chacune. Le corps pesant peut aussi être réalisé sous la forme d'un cylindre presque aussi long que la dimension 12 de la casette, de façon à appuyer sur plusieurs pièces de ferrite ensemble, ce qui diminue le travail de l'opérateur lors du remplissage de la casette. Le rayon de courbure de la partie de ce cylindre qui appuie sur les pièces 5 est nettement plus faible que celui de ces pièces.
Pendant la phase de frittage, le matériau ferrite est porté à une température peu inférieure à sa température de fusion, il est donc amolli et sa forme peut facilement être adaptée, en le posant sur une surface de forme particulière et en le chargeant par un corps pesant. On peut ainsi obtenir des pièces finales dont la forme de la section est différente de celle avant frittage. La forme de la pièce peut être modifiée assez notablement : l'expérience montre qu'on peut obtenir en lestant plus ou moins les pièces 5 des variations de forme de l'ordre de 10% des dimensions sans provoquer de fentes ou d'autres défauts : on peut ainsi obtenir plusieurs types de pièces légèrement différentes les unes des autres à partir des mêmes pièces de départ, ce qui limite le nombre de moules différents à prévoir pour la phase de pressage, et permet donc des économies d'investissement.
On évite en outre des déformations dites "en selle de cheval" conduisant à des rayons de courbure différents le long d'une pièce.
Les corps pesants 6 peuvent avoir pour section un secteur de cercle au lieu d'un cercle entier, car il est clair que seule compte la forme de leur partie inférieure.
Différentes variantes peuvent être imaginées pour la forme de la surface cylindrique concave supportant la pièce de ferrite. La figure 3 illustre quelques formes possibles. Sur la figure 3A, la surface supérieure de la pièce 10 a une section en forme de triangle pointe en bas 11. Sur les figures 3B et 3C, la surface supérieure des pièces 8 et 9 est en forme d'arc de cercle dont la concavité est tournée vers le haut.
Le rayon de courbure des surfaces supérieures des pièces 8 et 9 cylindriques et concaves des figures 3B et 3C est égal à celui désiré pour la surface externe des pièces de ferrite terminées.
Selon le résultat cherché le rayon externe avant frittage des secteurs de ferrite peut être choisi légèrement supérieur, ou pratiquement égal à celui des supports. Il est ainsi possible d'obtenir des pièces finies ayant le rayon de courbure du support en partant de pièces de rayon plus grand. Des pièces de rayons différents peuvent être obtenues avec des supports de frittage différents, en partant de pièces identiques, c'est-à-dire qu'en utilisant un seul outillage de pressage sous champ magnétique, on peut obtenir néanmoins des pièces légèrement différentes après frittage.
Un jeu optimal de conditions de frittage peut aisément être déterminé par l'homme du métier au moyen d'une expérimentation concernant la température, la durée, la vitesse de montée en température, pour obtenir les meilleures pièces possible (cotes, absence de fentes).
Sur la figure 3C, le support est une pièce posée sur le fond 7 d'une casette à fond plat standard. Sur les figures 3A et 3B, les éléments référencés respectivement 10 et 8 peuvent aussi être des pièces additionnelles posées dans une casette standard.

## Revendications

1. Procédé pour le frittage d'aimants, c'est-à-dire le chauffage à haute température d'une pièce de matériau magnétique préalablement moulée, la dite pièce étant moulée en forme de secteur de cylindre de révolution et étant, pendant la durée de la phase de chauffage, posée avec sa concavité tournée vers le haut sur un support où elle est supportée par une surface cylindrique concave d'axe horizontal ayant sa concavité tournée vers le haut, cependant qu'un corps pesant possédant au moins une surface inférieure cylindrique de révolution d'axe horizontal est posé sur la dite pièce de matériau magnétique, caractérisé en ce que, la pièce étant une pièce de ferrite, le rayon de la section de la surface inférieure cylindrique du dit corps pesant est inférieur au rayon interne de la section de la pièce de ferrite.

2. Procédé selon la revendication précédente, caractérisé en ce que le dit corps pesant est fait de cordiérite.

3. Procédé selon l'une des revendications 1 ou 2, caractérisé en ce que la dite surface cylindrique concave est obtenue en moulant une casette de frittage avec un fond muni d'une pluralité de rigoles dont la section est en forme d'arc de cercle dont la concavité est tournée vers le haut et dont le rayon est inférieur ou égal au rayon externe de la section de la pièce de ferrite avant frittage.

4. Procédé selon l'une des revendications 1 ou 2, caractérisé en ce que la dite surface cylindrique concave est obtenue en moulant une casette de frittage avec un fond muni d'une pluralité de rigoles dont la section est en forme de triangle pointe en bas.

5. Procédé selon l'une des revendications 1 ou 2, caractérisé en ce que la dite surface cylindrique concave est obtenue en posant dans une casette standard de frittage une pluralité de pièces additionnelles dont la section est en forme d'arc de cercle dont la concavité est tournée vers le haut et dont le rayon de la surface supérieure est inférieur ou égal au rayon externe de la section de la pièce de ferrite avant frittage.

6. Procédé selon la revendication précédente, caractérisé en ce que les dites pièces additionnelles sont réalisées en cordiérite.

7. Procédé selon la revendication 5, caractérisé en ce que les dites pièces additionnelles ont une longueur égale à celle de plusieurs pièces de ferrite mises bout à bout.

8. Matériel pour le frittage de pièces à fritter, lesquelles sont des pièces en ferrite préalablement moulées en forme de secteurs de cylindre de révolution, le matériel comportant au moins :
- un support dont une surface supérieure concave est un secteur de cylindre d'axe horizontal ayant sa concavité tournée vers le haut, destiné à supporter une pièce à fritter avec sa concavité tournée vers le haut, et
- un corps pesant, possédant une surface cylindrique de révolution, destiné à être posé, avec sa surface cylindrique en dessous, sur la pièce à fritter,
matériel caractérisé en ce que le rayon de la section de la surface cylindrique du corps pesant est inférieur au rayon des secteurs de cylindre des pièces sur lesquelles il est destiné à être posé.

## Patentansprüche

1. Verfahren zur Sinterung von Magneten, d.h. das Erhitzen auf sehr hohe Temperatur eines Teils aus magnetischem, zuvor geformten Materials, wobei dem besagten Teil die Form eines Drehzylindersektors gegeben wird und es über die Erhitzungsphase mit seiner Konkavität nach oben gewendet auf einen Träger gebracht wird, wo es von einer zylindrisch konkaven, horizontalen Achsfläche getragen wird, deren Konkavität nach oben gewendet ist, während ein Gewichtskörper, der mindestens eine kleinere Drehzylinderfläche horizontaler Achse aufweist, auf das besagte magnetische Material aufgesetzt wird, mit dem Merkmal, daß das Teil ein Ferritteil ist, der Radius des Schnitts der zylindrischen unteren Fläche des besagen Gewichstkörpers geringer als der Innenradius des Schnitts des Ferritteils ist.

2. Verfahren laut dem vorhergehenden Anspruch, mit dem Merkmal, daß der besagte Gewichtskörper aus Kordierit gefertigt ist.

3. Verfahren laut einem der Ansprüche 1 oder 2, mit dem Merkmal, daß die besagte konkave zylindrische Fläche durch die Formung einer Sinterungskassette mit einem Boden aus einer Vielzahl an Rinnen mit kreisbogenförmigem Schnitt und nach oben gewendeter Konkavität erhalten wird, deren Radius kleiner oder gleich groß wie der Außenradius des Schnitts des Ferritteils vor der Sinterung ist.

4. Verfahren laut einem der Ansprüche 1 oder 2, mit dem Merkmal, daß die besagte konkave zylindrische Fläche durch die Formung einer Sinterungskassette mit einem Boden aus einer Vielzahl an Rinnen erhalten wird, deren Schnitt die Form eines nach unten gerichteten Dreiecks aufweist.

5. Verfahren laut einem der Ansprüche 1 oder 2, mit dem Merkmal, daß die besagte konkave Fläche erhalten wird, indem in eine Standard-Sinterungskassette eine Vielzahl zusätzlicher Teile mit kreisbogenförmigem Schnitt und nach oben gewendeter Konkavität gegeben werden, deren Radius kleiner oder gleich groß wie der Außenradius des Schnitts des Ferritteils vor der Sinterung ist.

6. Verfahren laut dem vorhergehenden Anspruch, mit dem Merkmal, daß die besagten zusdätzlichen Teile aus Kordierit gefertigt sind.

7. Verfarhen laut Anspruch 5, mit dem Merkmal, daß die besagten zusätzlichen Teile eine gleiche Länge wie mehrere aneinandergereihte Ferritteile haben.

8. Material für die Sinterung von zu sinternden Teilen, wobei es sich um Ferritteile handelt, die zuvor in Formen mit einem Drehzylinderschnitt geformt wurden, das Material weist mindestens folgendes auf:
- einen Träger mit einer konkaven Oberfläche, die ein Zylinderschnitt horizontaler Achse mit nach oben gewendeter Konkavität ist, bestimmt zur Aufnahme eines zu sinternden Teils mit nach oben gewendeter Konkavität, und
- einen Gewichstkörper mit einer Drehzylinderfläche, dazu bestimmt, um mit nach unten gewendeter Zylinderfläche auf das zu sinternde Teil gesetzt zu werden,
und das Material das Merkmal hat, daß der Radius des Schnitts der Zylinderfläche des Gewichtskörpers kleiner als der Radius des Schnitts des Zylinders der Teile ist, auf die er gesetzt werden soll.

## Claims

1. A method of sintering magnets, i.e. heating to a high temperature an article of a magnetic material which has been previously moulded so that its shape corresponds to a sector of a cylinder of revolution, and during the heating operation, said article is so arranged on a support that its concave side faces upwards, said support having a concave cylindrical supporting surface whose axis extends in the horizontal direction and whose concave side faces upwards, while a weight having at least a lower surface in the shape of a cylinder of revolution whose axis extends in the horizontal direction is placed on said article of a magnetic material, characterized in that, given that the article is made of ferrite, the radius of the section of the cylindrical lower surface of the weight is smaller than the inside radius of the section of the ferrite article.

2. A method as claimed in the preceding Claim, characterized in that said weight is made from cordierite.

3. A method as claimed in Claim 1 or 2, characterized in that said concave cylindrical surface is obtained by moulding a sintering saggar comprising a bottom portion which is provided with a plurality of channels having an arc-shaped section whose concave side faces upwards and whose radius is smaller than or equal to the outside radius of the section of the ferrite article prior to sintering.

4. A method as claimed in Claim 1 or 2, characterized in that said concave cylindrical surface is obtained by moulding a sintering saggar comprising a bottom portion which is provided with a plurality of channels whose section is in the shape of a triangle whose apex faces downwards.

5. A method as claimed in Claim 1 or 2, characterized in that said concave cylindrical surface is obtained by providing in a standard sintering saggar a plurality of additional articles whose section is in the shape of an arc of a circle whose concave side faces upwards and the radius of the upper surface is smaller than or equal to the outside radius of the section of the ferrite article prior to sintering.

6. A method as claimed in the preceding Claim, characterized in that said additional articles are made from cordierite.

7. A method as claimed in Claim 5, characterized in that the length of said additional articles is equal to the length of a number of ferrite articles arranged end-to-end.

8. Tools for sintering articles to be sintered, which articles include ferrite articles which have been previously moulded so that their shape corresponds to sectors of a cylinder of revolution, said tools comprising at least:
- a support of which a concave upper surface is a sector of a cylinder whose axis extends in the horizontal direction and whose concave side faces upwards, which support is used to support an article to be sintered whose concave side faces upwards, and
- a weight having a surface which corresponds to a cylinder of revolution, which is placed on the article to be sintered in such a manner that its cylindrical surface faces downwards,
which tools are characterized in that the radius of the section of the cylindrical surface of the weight is smaller than the radius of the cylinder sectors of the articles on which said weight will be placed.
